(19) Europäisches Patentamt

European Patent Office

Office européen des brevets

(11) **EP 1 703 261 A1**

(12) **EUROPEAN PATENT APPLICATION**
published in accordance with Art. 158(3) EPC

(43) Date of publication:
20.09.2006 Bulletin 2006/38

(51) Int Cl.:
*G01F 1/66* (2006.01)

(21) Application number: 04807789.5

(22) Date of filing: 24.12.2004

(86) International application number:
PCT/JP2004/019433

(87) International publication number:
WO 2005/064288 (14.07.2005 Gazette 2005/28)

(84) Designated Contracting States:
**AT BE BG CH CY CZ DE DK EE ES FI FR GB GR HU IE IS IT LI LT LU MC NL PL PT RO SE SI SK TR**

(30) Priority: **26.12.2003 JP 2003435910**
**26.12.2003 JP 2003435952**
**26.12.2003 JP 2003436919**
**27.12.2003 JP 2003437007**

(71) Applicant: **THE TOKYO ELECTRIC POWER COMPANY INCORPORATED**
**Tokyo 100-8560 (JP)**

(72) Inventors:
• **MORI, Michitsugu**
**Chiyoda-ku,**
**Tokyo 1008560 (JP)**
• **TEZUKA, Kenichi**
**Chiyoda-ku,**
**Tokyo 1008560 (JP)**
• **TEZUKA, Hideaki**
**Chiyoda-ku,**
**Tokyo 1008560 (JP)**

(74) Representative: **HOFFMANN EITLE**
**Patent- und Rechtsanwälte**
**Arabellastrasse 4**
**81925 München (DE)**

(54) **ULTRASONIC FLOWMETER, WEDGE FOR ULTRASONIC FLOWMETER, METHOD FOR SETTING ULTRASONIC TRANSMITTING/RECEIVING UNIT, AND ULTRASONIC TRANSMITTING/RECEIVING UNIT**

(57) [OBJECT]
In order to provide a technology in an ultrasonic flowmeter to efficiently penetrate through both of a wedge and a fluid pipe surface so as to contribute to more accurate measurement of a flow rate.
[ORGANIZATION]
An ultrasonic flowmeter includes an ultrasonic transmitter for launching ultrasonic pulses of a predetermined frequency into the fluid to be measured in fluid pipe from an ultrasonic transducer along a measurement line; a flow velocity distribution measurement means for measuring flow velocity distribution of the fluid to be measured in a measurement region by receiving ultrasonic echoes (reflection wave A) reflected from the measurement region among the ultrasonic pulses incident into the fluid to be measured; and a flow rate operation means for operating a flow rate of the fluid to be measured in the measurement region based on the flow velocity distribution of the fluid to be measured, and a clamp-on type is adopted. A condition to make both a distance from the ultrasonic transmitter in the wedge to the outer surface of the liquid pipe and the wall width of the fluid pipe be an integral multiple of $\lambda/2$ of the frequency used should be satisfied.

EP 1 703 261 A1

**(Cont. next page)**

## F I G. 1

FLUID PIPE
(ex. SUS)
10

LONGITUDINAL WAVE A
(FOR MEASUREMENT)

INNER SURFACE OF
FLUID PIPE

11
FLUID TO BE
MEASURED

$Lx2$

$Lx1$

OUTER SURFACE OF
FLUID PIPE

20
ULTRASONIC TRANSMITTING
AND RECEIVING MEANS
(TRANSDUCER)

30
WEDGE

## Description

Technical Field

The present invention relates to an ultrasonic flowmeter possible to instantaneously measure a flow rate of a fluid to be measured time-dependently from flow velocity distribution in a measurement region and a technology relating to the above-described flowmeter

Background Art

Various technologies have been proposed for a Doppler ultrasonic flowmeter which can measure a flow rate without contacting fluid to be measured (for instance, Japanese Patent Application Laid-open No. 2000-97742)

Patent Document 1: Japanese Patent Application Laid-open No. 2000-97742

The above-described technology will be explained concretely. The Doppler ultrasonic flowmeter disclosed in the above-described document determines a flow rate of a fluid to be measured provided with: an ultrasonic transmission means for launching ultrasonic pulses having a predetermined frequency from an ultrasonic transducer into the fluid to be measured in piping for a fluid (for instance water) along a measurement line; a flow velocity distribution measurement means for measuring flow velocity distribution of the fluid to be measured in a measurement region by receiving ultrasonic echoes reflected from a reflector (for instance, bubble) in the fluid in the measurement region among the ultrasonic pulses incident into the fluid to be measured, and a flow rate operation means for operating the flow rate of the fluid to be determined in the measurement region based on the flow velocity distribution of the fluid to be measured.

This technology is a method to measure flow velocity distribution of a fluid to be measured flowing in a pipe, and is excellent in responsivity to the flow rate fluctuating timelikely during a transitory time. The technology enables also the measurement of the flow rate of a fluid to be measured efficiently, precisely and instantly even immediately after a spot where flow of fluid is not yet sufficiently developed or a spot where a three dimensional flow occurs in such as bent pipe, for instance, an elbow pipe, or inversion piping in a letter U-shape. This technology has a characteristic such that it enables precise measurement even without "a flow rate correction coefficient" deduced from experimental values or empirical values, when compared with an ultrasonic flowmeter provided before, and, therefore, is valued highly.

(Clamp-on)

When the fluid to be measured is a liquid, a "clamp-on type" ultrasonic flowmeter which fixes an ultrasonic transmitter to a pipe via a wedge is often used, because it has the merit of being able to be retrofitted to piping. As for the wedge, the first priority is that it must be of a material permeable to ultrasonic wave. For convenience in performing a setting work of an ultrasonic trasmitter after determining an incident angle of the ultrasonic wave, synthetic resin (for instance, acrylic resin) is generally adopted.

(Integration of Transmitting and Receiving Functions of Ultrasonic Wave)

In recent ultrasonic flowmeters, it is often the case that an ultrasonic emission device and a receiver to receive the reflected ultrasonic are provided together as a unit. Although with an ultrasonic flowmeter in which an ultrasonic emission device and a receiver to receive the reflected ultrasonic wave are provided separately, each device must be fixed after strict positioning to piping, an ultrasonic flowmeter provided as a unit consisting of ultrasonic transmitting and receiving devices, has the merit of being able to be fixed to piping in one step.

Generally, an ultrasonic transmitting and receiving device is set with an inclination to a perpendicular line of a pipe wall of a prescribed angle, which corresponds to the incident angle of the transmitted ultrasonic pulse to the pipe wall. The ultrasonic pulse passes through the pipe wall, travels in a straight line in a fluid to be measured. The direction of travel of the ultrasonic pulse in the fluid to be measured corresponds to a measurement line, and a flow velocity distribution along the measurement line or a flow velocity distribution in a cross section of the piping can be calculated.

(Reflection by a Piping Wall)

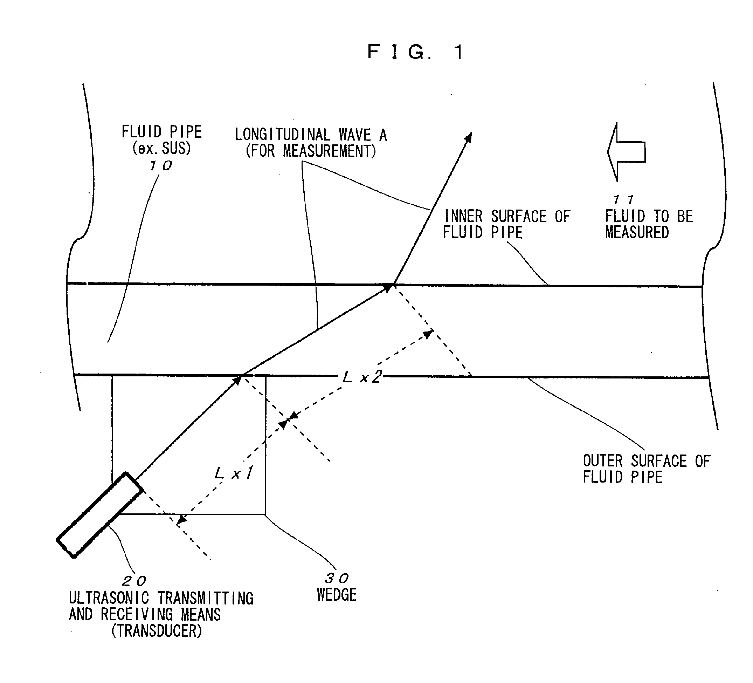

When aiming at further improvement in precision of measurement for the above-described "clamp-on type", the following problem emerged. It will be explained according to FIG. 1.

A wedge and a pipe wall exist midway along the ultrasonic path to the fluid to be measured. When the ultrasonic wave can not permeate through the wedge and the pipe wall perfectly, noise due to reflection from the pipe wall is generated, which results in a lowering of the signal strength of the signal returned from the reflector to be measured.

(Close Contact of Wedge)

When performing measurement using a "clamp-on type" ultrasonic flowmeter, if there is no provision of a wedge to make the piping and the ground plane of the ultrasonic transducer close contact, the actually measured pulse width becomes narrower than an expected width of the ultrasonic pulse. In such a case, it requires working for correction of the value by actually measuring the pulse width or it often results in an incorrect measurement value due to omitting of actual measurement and correction.

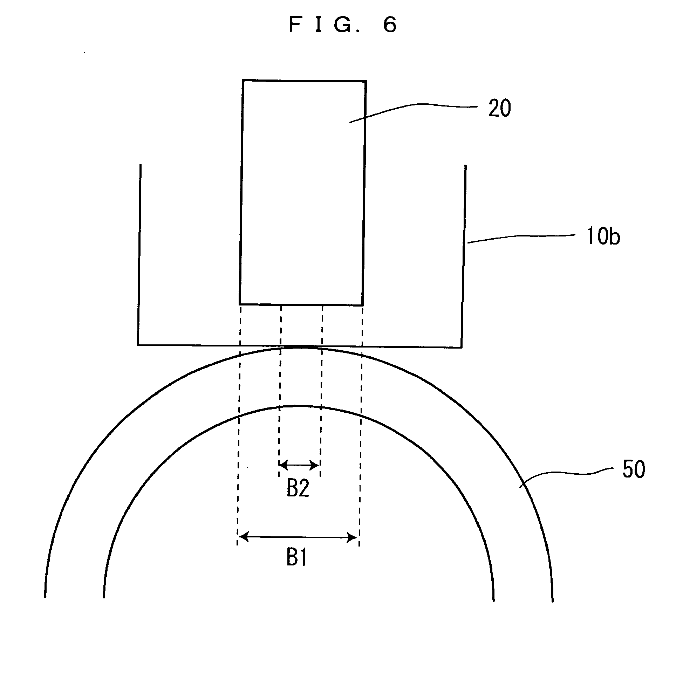

Explained with reference to FIG. 6, a wedge 10b is provided so as to place a fluid to be measured on a perimeter of piping 50 at a measurable position. A hole enabling the disposition of an ultrasonic transducer 20 through the hole is provided in the wedge 10b. The ultrasonic transducer 20 is disposed through this hole to measure the fluid to be measured in the piping 50. Although the pulse width of the ultrasonic pulse actually generated from the ultrasonic transducer 20 is in the range of B1, the pulse width of the ultrasonic pulse which actually reaches into the piping 50 is in the range of B2. In other words, when paying attention to the position of the wedge 10b, it is found that the contact area between the bottom face of the wedge 10b and the perimeter face of the piping 50 equals the pulse width B2. That is, there is a fear that the measurement accuracy is influenced by the magnitude of the contact area.

As for a site for installing an ultrasonic flowmeter, two cases are conceivable. One case is that the size and shape of the caliber of piping to be measured are possible to assume in advance and the other case is that these data are obtained for the first time after arriving on site. In the latter case, a suitable wedge member is selected from previously prepared wedge members to perform measurement. However, since there are a plenty of varieties in size and shape of the caliber of piping, sometimes it may not match previously prepared wedges.
Even when the size and shape of the caliber of piping to be measured are known in advance, according to conditions of coating on the pipe surface or deterioration with time (for instance, degradation of coating or corrosion), there is a fear that a wedge member prepared according to the given data does not match.

(Accurate Fixation of Wedge)

An ultrasonic transmitting and receiving unit in which an ultrasonic transmitting and receiving device is provided with preinstalled wedge has a following merit, provided that the wedge is accurately fixed to piping, in other words, a composition surface of a wedge to piping is fixed to the peripheral surface of the piping without inclination. That is, by only adjusting a supporting angle (inclination angle) of the wedge for the ultrasonic transmitting and receiving device to a prescribed angle, the inclination angle between the ultrasonic transmitting and receiving device and the piping, in other words, an incident angle of the ultrasonic pulse can be adjusted to a favorable angle according to the material of the piping, the inner diameter of the piping, the outer diameter or thickness of the piping, or the sort of the fluid to be measured. However, a fixation work by positioning the composition surface of the wedge to the outer surface of the piping without inclination accurately requires a very long time and a skill. Even when it can be accurately installed once, deformation due to aging, thermal deformation due to a high temperature fluid, and the like happen to the wedge or the piping, which may cause a bad influence to the measurement accuracy.

(Error Caused by Mechanical Residual Vibration)

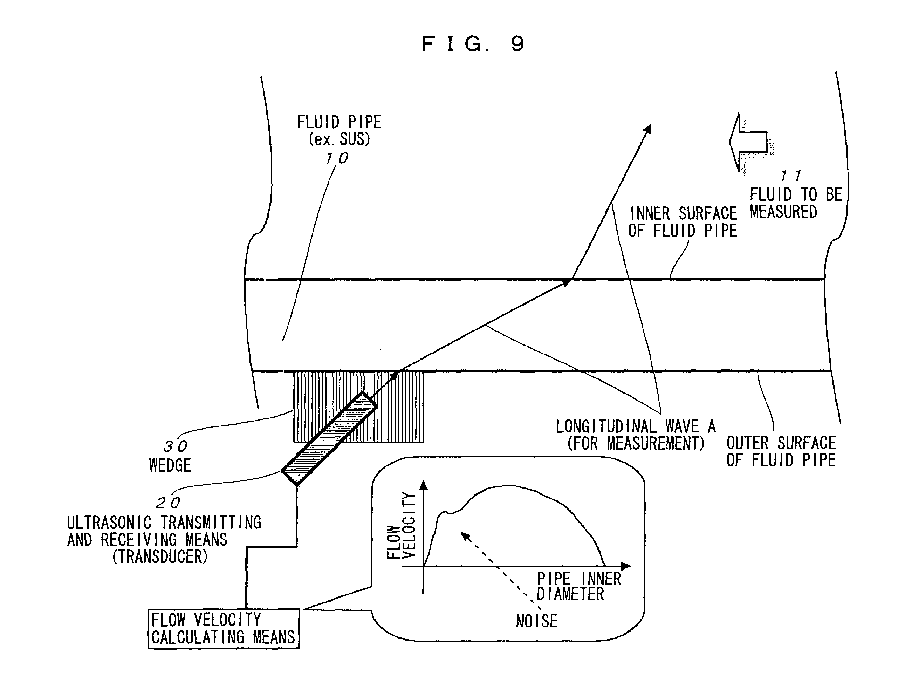

When an emission and a receiver are provided as one unit of ultrasonic transmitting and receiving device (transducer 20), it is controlled so as to function as an emission and to function as a receiver repeatedly by switching both functions. The emission is provided with an oscillator (piezo element) to generate ultrasonic wave and vibrates by receiving a drive signal. But, even when the drive signal is suspended, mechanical vibration still remains. The vibration left after the drive signal is suspended works as noise to the switched receiver. As a result, in a step of flow velocity calculating means, error which seems to be caused by the noise as shown in FIG. 9 is generated. Because the flow velocity distribution along the internal diameter of the pipe does not take a smooth curve.
When the diameter of the fluid pipe relating to the fluid to be measured is large, noise is not so much of a problem. However, when the pipe diameter is small, it is found that it causes negligible measurement errors. It is also found that mechanical vibration has individual differences of oscillation or emission. There are two types of emissions: one easily remains as vibration after switching to a receiver and the other does not.

Disclosure of the Invention

An object of the present invention is to provide a technology which contributes to further improvement of measurement accuracy for a "clamp-on type" ultrasonic flowmeter. That is, the following four problems are what the present invention should solve.

Firstly, a problem to be solved by the present invention is provision of a technology to contribute to more accurate measurement of fluid while effectively penetrate through a wedge and a wall surface of piping.

Secondly, another problem to be solved by the present invention is to make positioning a wedge to support an ultrasonic transmitting and receiving device functioning both emission and receiver easy, to reduce a fixation work to piping, to make an adjustment work at the time of inspecting easy so that a proper incident angle to the piping of an ultrasonic transmitting and receiving device can be easily maintained, and to provide a method of setting such an ultrasonic transmitting and receiving device, an ultrasonic transmitting and receiving device unit, and an ultrasonic flowmeter

Thirdly, provision of a wedge member used for an ultrasonic transducer to transmit the pulse width of an ultrasonic pulse the same as its performance irrespective of caliper or shape of the piping is a problem to be solved by the present invention.

Fourthly, provision of a technology to restrain a measurement error caused by noise generated from the emission in an ultrasonic flowmeter in which an emission and a receiver are provided as one ultrasonic transmitting and receiving device, and to determine a flow rate more accurately is also a problem to be solved by the present invention.

(Claim 1)

An invention described in claim 1 relates to an ultrasonic flowmeter for measuring a flow rate of a fluid to be measured including: an ultrasonic transmitter for launching ultrasonic pulses of a predetermined frequency into the fluid to be measured (11) in fluid pipe (10) from an ultrasonic transducer along a measurement line; a flow velocity distribution measurement means for measuring flow velocity distribution of the fluid to be measured in a measurement region by receiving ultrasonic echoes reflected from the measurement region among the ultrasonic pulses incident into the fluid to be measured (11); and a flow rate operation means for operating a flow rate of the fluid to be measured in the measurement region based on the flow velocity distribution of the fluid to be measured. In the ultrasonic flowmeter, an ultrasonic transmitter and a receiver for receiving ultrasonic echoes are made to be an ultrasonic transducer (20) integrating a transmitting function and a receiving function of the ultrasonic wave.

A wedge (30) for fixing the ultrasonic transducer (20) to the outer surface of the fluid pipe (10) for the fluid to be measured (11) is provided, and the distance Lx1 from the ultrasonic transducer (20) in the wedge (30) to the outer surface of the fluid pipe (10) is formed in an integral multiple of a half-wave length through which the ultrasonic wave can penetrate.

(Explanation of Terms)

The ultrasonic flowmeter includes a usual Doppler ultrasonic flowmeter and an ultrasonic flowmeter using a correlation method. The ultrasonic flowmeter using the correlation method is an ultrasonic flowmeter disclosed in, for instance, Japanese Patent Application Laid-open No. 2003-344131.

Both determine a flow rate of a fluid to be measured with means including an ultrasonic transmitter for launching ultrasonic pulses of a predetermined frequency into a fluid to be measured in fluid pipe from an ultrasonic transducer along a measurement line; a flow velocity distribution measurement means for measuring flow velocity distribution of the fluid to be measured in a measurement region by receiving ultrasonic echoes reflected from the measurement region among the ultrasonic pulses incident into the fluid to be measured; and the flow rate operation means for operating a flow rate of the fluid to be measured in the measurement region based on the flow velocity distribution of the fluid to be measured.

(Explanation of Terms)

The "flow rate calculation means" is a means for performing the following calculation, when m(t) is a flow rate.

$$[\text{Equation 1}]$$

$$m(t) = \rho \int v(x \cdot t) \cdot dA \qquad \cdots \cdots (1)$$

where p: density of the fluid to be measured.

$v(x \cdot t)$: a velocity component (in the x direction) at the time t

From the above equation (1), the flow rate m(t) in the elapsed time t during which the fluid flows in a fluid pipe can be rewritten as follows.

[Equation 2]

$$m(t) = \rho \iint vx(r \cdot \theta \cdot t) \cdot r \cdot dr \cdot d\theta \qquad \cdots\cdots(2)$$

where $vx(r \cdot \theta \cdot t)$: the velocity component in the direction of the piping axis at a distance r and angle $\theta$ from the center of the pipe cross section at the time t.

It should be noted that if the flow of the fluid to be measured flown in the pipe is a flow along the pipe axis direction and can neglect the flow in the radial direction or at the angle of $\theta$, namely vr and v$\theta$, vx >>vr = v$\theta$, and the flow rate measurement is simplified and expressed by the following equation.

[Equation 3]

$$m(t) = \sum_{i}^{N} \cdot \frac{2\pi}{N} \int_{-R}^{R} \{vx(r \cdot \theta i \cdot t)/\sin\alpha\} \cdot r \cdot dr \qquad \cdots\cdots(3)$$

where $\alpha$ is an incident angle of the ultrasonic wave generated from the ultrasonic transducer, namely, an angle against the perpendicular line to the pipe wall.

In order to make a distance Lx2 passing through the wall of the fluid pipe (10) an integral multiple of a half-wave length ($\lambda/2$) of the transmitting frequency, it is necessary to adjust the transmitting frequency of the ultrasonic transmitter (20).

The transmitting frequency of the ultrasonic transmitter (20) is adjusted so. With this transmitting frequency, the distance Lx1 of the wedge (30) is adjusted to be an integral multiple of the half-wave length. Then, transmittancy becomes drastically favorable.

It should be noted that damping of ultrasonic wave in the wedge (30) can be restrained when the distance Lx1 is kept as small as possible.

(Other Embodiments)

It is also possible to provide an ultrasonic flowmeter as below.

An ultrasonic flowmeter including: a first ultrasonic transmitting and receiving device transmitting ultrasonic pulses in a fluid to be measured in piping and receiving ultrasonic echoes reflected from a measurement region; an ultrasonic transmitting and receiving unit provided with a wedge to support the first ultrasonic transmitting and receiving device at a prescribed inclination angle; and an operation unit performing operation for flow rate calculation using ultrasonic echoes received by the first ultrasonic transmitting and receiving device, in which the wedge (30) includes a supporting unit which can detachably support the second ultrasonic transmitting and receiving device at a position a prescribed distance away from the first ultrasonic transmitting and receiving device along the axial direction of the piping, inclined at the same angle as the inclination angle of the first ultrasonic transmitting and receiving device but in the opposite direction.

The operation unit includes a flow velocity distribution operation means determining flow velocity distribution corresponding respectively from ultrasonic echoes received by the respective ultrasonic transmitting and receiving devices; and a reference flow velocity distribution calculation means determining a reference flow velocity based on the obtained respective flow velocity distribution in the case when the inclination angle of the first ultrasonic transmitting and receiving device of the wedge agrees with the inclination angle of the first ultrasonic transmitting and receiving device to the perpendicular line to the axis of the piping.

Furthermore, attachment of the wedge to the piping is adjustable at the time of inspection during installation or after installation so as to ensure that the flow velocity distribution obtained from the first ultrasonic transmitting and receiving device coincides with the reference flow velocity distribution.

(Explanation of Terms)

The above-described ultrasonic flowmeter also includes a usual Doppler ultrasonic flowmeter and an ultrasonic flowmeter using a correlation method. The ultrasonic flowmeter using the correlation method is an ultrasonic flowmeter disclosed in, for instance, Japanese Patent Application Laid-open No. 2003-344131.

(Operation of an ultrasonic Flowmeter Relating to the Above-Described "Other Embodiments")

Along with the first ultrasonic transmitting and receiving device used for actual measurement, a second ultrasonic transmitting and receiving device is provided, and both of these devices are fixed to a wedge, inclined at equal but opposite angles. Through this formation, if the wedge is fixed at an angle to the piping, there arises a prescribed difference between respective flow velocity distributions measured by two ultrasonic transmitting and receiving device and calculated. Accordingly, by using respective flow velocity distributions having such a speed difference, an original flow velocity distribution (reference flow velocity distribution) which should be measured when the wedge is accurately positioned to the piping can be calculated. If output result of the first ultrasonic transmitting and receiving device used for actual measurement is adjusted so as to coincide with such an original flow velocity distribution, it is possible to accurately position the wedge to the piping with ease. For positioning, it does not require any skill in particular.
Therefore, the work of fixing the ultrasonic transmitting and receiving unit to the piping can be made easier than that for a conventional product, and further, when inspecting after fixation, by determining the difference from an output of the first ultrasonic transmitting and receiving device can be performed using the second ultrasonic transmitting and receiving device, it is possible to easily make readjustments at the time of occurring aging or heat change in the piping or the like, so that stable measurement accuracy can be maintained.

(Claim 2)

The invention described in claim 2 defines the ultrasonic flowmeter according to claim 1. That is, a contact surface with the fluid pipe of the wedge is made equal to the curvature of the fluid pipe.

(Operation)

Since the contact surface of the piping and the ultrasonic transducer can be made close contact with each other, ultrasonic pulses can be transmitted into the fluid to be measured without making the pulse width of the ultrasonic pulse narrower than the expected pulse width, Furthermore, since a signal from a reflector in the fluid to be measured can perform transmitting and receiving efficiently without lowering in signal strength due to narrowing of the pulse width, measurement accuracy can be enhanced.

(Claim 3)

The invention described in claim 3 defines the ultrasonic flowmeter according to any one of claims 1 or 2.
That is, the distance from the ultrasonic transmitter to the outer surface of the fluid pipe of the wedge is made longer than the distance obtained from multiplying the velocity of the ultrasonic wave penetrating through the wedge by the time of the dead zone which the ultrasonic oscillator carries.
An incident angle $\alpha$ of an ultrasonic wave generated from the ultrasonic transducer (20) is determined by specifying variable conditions such as material of piping, the inner diameter and the outer diameter or thickness of the piping, and the sort of fluid to be measured.
When the distance from the ultrasonic transmitter (20) to the outer surface of the fluid pipe (10) in the wedge (30) is taken as Lx, and the velocity with which ultrasonic wave penetrate through the wedge (30) is taken as Vk, and the time of dead zone which an oscillator of the ultrasonic is taken as Tt, Lx>Vk>Tt.
Concretely, when the material of the wedge (30) is, for instance, acrylic resin, since Vk = 2700 m/sec, Tt = 20 ms, it will be sufficient if 54 mm is ensured as Lx.

(Operation)

If Lx can be ensured to be larger than Vk x Tt, even when the oscillator has residual vibration, a required measurement range is ensured. Therefore, vibration is not transmitted to the receiver. Accordingly, occurrence of measurement errors due to noise can be restrained.
Conventionally, the previously described Lx is customarily taken to be about 5 to 50 mm, because the shorter the Lx, the less damping of the ultrasonic wave passing through the wedge.

(Claim 4)

The invention described in claim 4 defines the ultrasonic flowmeter described any one of claims 1 to 3.
That is, the material of the wedge from the ultrasonic transmitter and receiver to the outer surface of the fluid pipe is made equal to that of the acoustic impedance of the fluid pipe.

"Equal impedance" is for instance about pluses and minuses 10%, more preferably, about pluses and minuses 5%.

(Operation)

Ultrasonic wave transmitted by the ultrasonic transmitter wants to use reflection waves reflected to bubbles or the like in the fluid to be measured, but if material (acoustic impedance) differs between the wedge and the fluid pipe, "transverse waves" of the ultrasonic are generated at the interface therebetween. The existence of the traverse wave is one of the causes of the measurement error.
However, if the material of a portion from the ultrasonic transmitter to the outer surface of the fluid pipe in the wedge is a material equal to the acoustic impedance of the fluid pipe, a transverse wave is not generated. Accordingly, occurrence of measurement errors caused by the transverse wave can also be restrained.
The materials of an ultrasonic transmitting unit (32) and a fixation unit (31) may differ from each other, or may be equal (namely, one-piece). If a material small in Vk value can be adopted for the ultrasonic transmitting unit (32), it becomes possible to provide a compact wedge (30) capable of restraining generation of noise.

(Operation)

Through the above structure, since vibration remained after the oscillator in the ultrasonic transmitting and receiving means stops vibration is absorbed in the distance from the ultrasonic transmitter (20) to the outer surface of the fluid pipe (10), in the ultrasonic transmitting unit (32) it does not work as noise to a receiver. Accordingly, occurrence of measurement errors can be restrained.

(Claim 5)

The invention described in claim 5 relates to a wedge used to an ultrasonic flow meter for measuring a flow rate of a fluid to be measured including: an ultrasonic transmitter for launching ultrasonic pulses of a predetermined frequency into the fluid to be measured in fluid pipe from an ultrasonic transducer along a measurement line; a flow velocity distribution measurement means for measuring flow velocity distribution of the fluid to be measured in a measurement region by receiving ultrasonic echoes reflected from the measurement region among the ultrasonic pulses incident into the fluid to be measured; and a flow rate operation means for operating a flow rate of the fluid to be measured in the measurement region based on the flow velocity distribution of the fluid to be measured, in which the ultrasonic transmitter and the ultrasonic echo receiver are formed in one piece.
The ultrasonic transmitter and the receiver to receive the ultrasonic echoes is made an ultrasonic transducer in which transmitting and receiving functions of ultrasonic wave are integrated, and the wedge includes; a fixation unit to fix the ultrasonic transducer to a fluid pipe relating to a fluid to be measured, and an ultrasonic transmitting unit which is from the ultrasonic transmitter fixed to the fixation unit to the outer surface of a fluid pipe. The distance passing to the inner surface of the fluid pipe from the outer_surface of the fluid pipe is an integral multiple of a half-wave length of incident ultrasonic wave, and the distance from the ultrasonic transmitter to the outer surface of the fluid pipe in the wedge is taken to be an integral multiple of a half-wave length of incident ultrasonic wave.

(Claim 6)

The invention described in claim 6 defines the wedge described in claim 5.
That is, the contact surface with the fluid pipe is made equal to the curvature of the fluid pipe.

(Claim 7)

The invention described in claim 7 defines the wedge described in any one of claims 5 and 6.
The wedge (3 0) includes a fixation unit (31) for fixing the ultrasonic transmitter (20) to the fluid pipe (10) relating to the fluid to be measured (11), and an ultrasonic transmitting unit (32) from the ultrasonic transmitter (20) fixed to the fixation unit (31) to the outer surface of the fluid pipe (10), and the distance from the ultrasonic transmitter (20) in the ultrasonic transmitting unit (32) to the outer surface of the fluid pipe (10) is made longer than the distance calculated by multiplying the velocity with which ultrasonic wave penetrates through the wedge (30) and the time of the dead zone which the oscillator of ultrasonic wave carries.
Material of an ultrasonic wave transmitting unit (32) and a fixation unit (31) may differ from each other, or may be equal (namely, one-piece). If material small in Vk value can be adopted for the ultrasonic wave transmitting unit (32), it becomes possible to provide a compact wedge (30) capable of restraining generation of noise.

(Operation)

Through the above structure, since vibration remained after the oscillator in the ultrasonic wave transmitting and receiving means (20) stops vibration is absorbed in the ultrasonic wave transmitting unit (32) between the ultrasonic wave transmitter (20) and the outer surface of the fluid pipe (10), it does not work as noise to a receiver. Accordingly, occurrence of measurement errors can be restrained.

(Claim 8)

The invention described in claim 8 defines the wedge described in claim 7.
That is, material of the ultrasonic wave transmitting unit in the wedge is made equal to that of the acoustic impedance of the fluid pipe.

(Operation)

Since a traverse wave is not generated in the ultrasonic flowmeter adopting the wedge relating to the invention described in the present claim, occurrence of measurement errors caused by the transverse wave can also be restrained.

(Method of Setting to Pipe for Ultrasonic Transmitting and Receiving Unit)

Then, a method of setting an ultrasonic transmitting and receiving unit to a pipe will be disclosed. It is a method of setting the ultrasonic transmitting and receiving unit used to a first ultrasonic transmitting and receiving device to generate ultrasonic pulses to a fluid to be measured in the piping and receive ultrasonic echoes reflected from a measurement region, and an ultrasonic flowmeter provided with a wedge supporting the first ultrasonic transmitting and receiving device at a prescribed angle of inclination, to a pipe.
The method of setting is such that, at first, the second ultrasonic transmitting and receiving device is provided on the wedge a prescribed distance away from the first ultrasonic transmitting and receiving device along the axial direction of the pipe inclined at the same angle as the angle of inclination in the opposite direction of the first ultrasonic transmitting and receiving device on the fixation surface to the pipe of the wedge.
Next, at the time of inspecting when fixing to the pipe or after fixing, from ultrasonic echoes received by the respective ultrasonic transmitting and receiving devices, the flow velocity distributions corresponding to the respective ultrasonic waves are determined. Based on the obtained respective flow velocity distributions, a reference flow velocity distribution when the inclination angle of the first ultrasonic transmitting and receiving device on the wedge and the inclination angle of the first ultrasonic transmitting and receiving device to the perpendicular line to the pipe axis are coincided is determined.
Then, a process to adjust an installation posture of the wedge to the pipe so as to coincide the flow velocity distribution obtained from the first ultrasonic transmitting and receiving device with the reference flow velocity distribution.

(Variation in Setting Method)

As a variation in the method of setting, it is possible to provide a process to remove the second ultrasonic transmitting and receiving device from the wedge after adjusting the installation of the wedge.

(Another Variation in Setting Method)

As another variation in the setting method, it is possible to determine the reference flow velocity distribution as a mean value of respective flow velocity distributions obtained from the first ultrasonic transmitting and receiving device and the second ultrasonic transmitting and receiving device.

(Ultrasonic Transmitting and Receiving Unit)

It is also possible to provide an ultrasonic transmitting and receiving unit used to an ultrasonic flowmeter including a first ultrasonic transmitting and receiving device which transmits ultrasonic pulses in the fluid to be measured in the pipe and receives ultrasonic echoes reflected from the measurement region, and a wedge supporting the first ultrasonic transmitting and receiving device at a prescribed inclination angle.
That is, the wedge is provided with a supporting unit which can detachably support the second ultrasonic transmitting and receiving device at a position a prescribed distance away to the first ultrasonic transmitting and receiving device inclined along the pipe axial direction at the same angle as the inclination angle of the first ultrasonic transmitting and receiving device in the opposite direction.

Further, at the time of inspecting when fixing to the pipe or after fixing, from ultrasonic echoes received by the respective ultrasonic transmitting and receiving devices, the flow velocity distributions corresponding to the respective ultrasonic waves are determined. Based on the obtained respective flow velocity distributions, a reference flow velocity distribution when the inclination angle of the first ultrasonic transmitting and receiving device on the wedge and the inclination angle of the first ultrasonic transmitting and receiving device to the perpendicular line to the pipe axis are coincided is determined. It is possible to adjust an installation posture of the wedge to the pipe so as to coincide the flow velocity distribution obtained from the first ultrasonic transmitting and receiving device with the reference flow velocity distribution.

Effect of the Invention

According to the present invention, it becomes possible to provide a technology contributing to further improved measurement accuracy for the "clamp-on" type ultrasonic flowmeter.
Firstly, it has enabled the provision of a technology contributing to efficient ultrasonic penetration through both the wedge and the pipe wall surface and more acculate measurement of flow rate.
Secondly, it has made positioning the wedge supporting the ultrasonic transmitting and receiving device serving as an emission and receiver to the pipe easier, and has simplified installation. Furthermore, it has become possible to make adjustments work more easily at the time of inspection and to easily maintain a suitable incident angle of the ultrasonic transmitting and receiving device to the pipe. It was also possible to provide a method of setting such an ultrasonic transmitting and receiving device, an ultrasonic transmitting and receiving unit and an ultrasonic flowmeter.
Thirdly, it has also possible to provide a wedge member used to an ultrasonic transducer transmitting the pulse width of an ultrasonic pulse as its performance and a method of installing the wedge member irrespective of a pipe caliber and a shape.
Fourthly, in an ultrasonic flowmeter providing an emission and a receiver as an ultrasonic transmitting and receiving device, it has also become possible to provide a technology to restrain measurement errors caused by noise generated from the emission and to measure a flow rate more accurately.

Best Mode for Carrying out the Invention

Hereinafter, the present invention will be further explained in detail based on an embodiment and drawings. Drawings used here are from FIG. 1 to FIG. 5, FIG. 7 and FIG. 8.

(FIG. 1)

In an ultrasonic flowmeter to measure a flow rate in a fluid pipe 10 through which a fluid to be measured 11 flows, FIG. 1 is provided with an ultrasonic transmitting and receiving means (transducer 20) serving as a receiver receiving ultrasonic echoes reflected from a measurement region of ultrasonic pulses incident into the fluid to be measured 11. The transducer 20 is fixed at a prescribed portion on the pipe 10 by a plastic (for instance, made of acryl resin) wedge 30.
The transducer 20 serves as an ultrasonic transmitter transmitting ultrasonic pulses of a prescribed frequency (reference frequency) along a measuring line to the fluid to be measured 11, and as a flow velocity distribution measuring means to receive ultrasonic echoes reflected from the measurement region of the ultrasonic pulses incident into the fluid to be measured, and measure a flow velocity distribution of the fluid to be measured in the measurement region. Though not shown, the transducer is connected to a computer such as a micro computer, a CPU, an MPU or the like as a flow rate operating means which seeks for a flow rate of the fluid to be measured time dependently based on the flow velocity distribution, and a display device which can display the output from the computer in time series.
An amplifier for vibration as a signal generator to vibrate the transducer 20 is provided to the transducer 20, and a pulse electric signal having a prescribed reference frequency is inputted from the amplifier for vibration to the ultrasonic transducer. An ultrasonic pulse having a required reference frequency is generated by application of the pulse electric signal along the measuring line. The ultrasonic pulse is a straight type beam having a pulse width of about 5 mm with hardly any expansion.
The transducer 20 is designed to receive ultrasonic echoes which are created such that transmitted ultrasonic pulses hit reflectors (e.g. "gas bubbles" not shown in the drawing) in the fluid 11 and are reflected.
The ultrasonic echoes due to longitudinal waves received by the transducer 20 are received by a reflected wave receiver which is served by the transducer 20, and are converted to echo electric signals by the reflected wave receiver. The echo electric signal is digitalized by passing through an AD transducer after amplified by an amplifier. Then, the digitalized digital echo signal is imputed into a flow velocity calculator provided with a flow velocity distribution measuring circuit.
An electric signal having a reference frequency from an oscillation amplifier is digitalized and imputed into the flow velocity calculator which measures a flow velocity using a flow velocity change based on the Doppler shift from a frequency difference of both signals or a mutual correlation value of both signals, and calculates a flow velocity in a measurement region along a measuring line. By correcting a flow velocity distribution of a measurement region with an ultrasonic wave incident angle $\alpha$, flow velocity distribution in a cross section of a fluid pipe can be measured.

The frequency of the ultrasonic wave in the distance Lx2 is set so as to be an integral multiple of a half-wave length of the ultrasonic frequency of the transducer 20. In other words, if specifications (material or wall thickness) of the fluid pipe 10 are determined, the distance Lx2 passing through the pipe wall is also determined.

As the actual steps, first, the pipe wall thickness is sought. It can be obtained by an actual measurement or from pipe specifications.

Next, the distance Lx2 is calculated from an ultrasonic incident angle from the transducer 20, the wedge 30, materials of the pipe, or the like.

Then, the frequency of an ultrasonic wave generated by the transducer 20 is determined so that the Lx2 is an integral multiple of a half-wave length of an incident ultrasonic frequency. The Lx1 is determined to be an integral multiple of the half-wave length, using the determined frequency.

When fluid pipe specifications are known in advance, it is satisfactory to prepare a wedge having the distance Lx1. When a pipe wall thickness is actually measured on-the-spot, it is possible to prepare a wedge on-the-spot.

Preparation of a wedge on-the-spot is carried out as follows. A mold of the shape of the wedge is disposed on the circumference of the pipe. Next, material for the wedge (a liquid solidifying over time) is poured into the mold. A dummy which is the same in shape as the ultrasonic transducer 20 is set up before the liquid is solidified. A release agent is applied on the inner circumferential surface of the mold and the outer circumferential surface of the dummy 19. When the fluid is solidified, the mold and the dummy are pulled out. The ultrasonic transducer 20 is set in a hole in which the dummy was inserted.

Since ultrasonic wave is attenuated in the wedge 30, it is common to limit the attenuation of ultrasonic wave by making the distance Lx1 as small as possible.

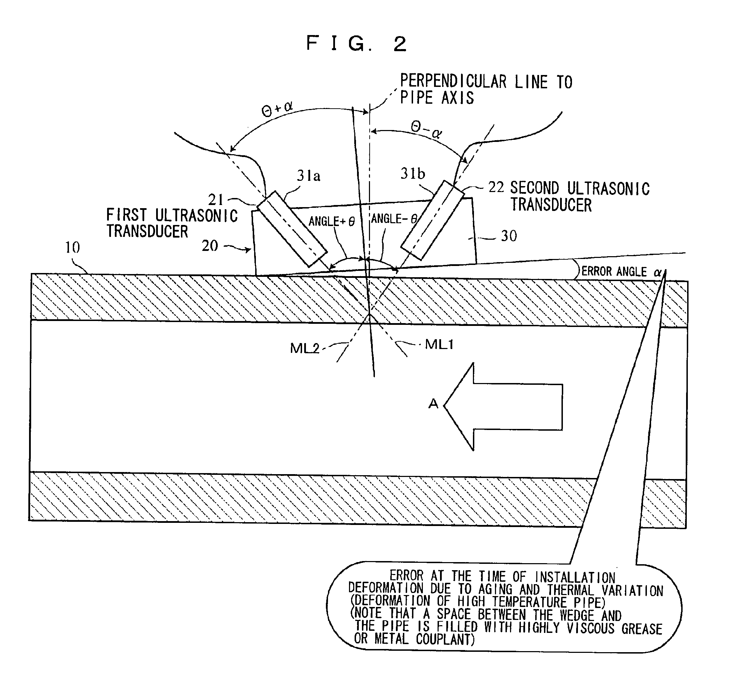

A second embodiment will be explained based on FIG. 2.

The ultrasonic transmitting and receiving means 10 includes a wedge 30, a first ultrasonic transducer 21 supported by one of the supporting units 31a of the wedge 30, and a second ultrasonic transducer 22 supported by the other supporting unit 31b of the wedge 30.

Ultrasonic transmitting and receiving devices are installed in both the first ultrasonic transducer 21 and the second ultrasonic transducer 22, and ultrasonic pulses are transmitted from the respective ultrasonic transducer, and receive the reflected ultrasonic echoes.

It is satisfactory for the wedge 30 if the supporting units 31a and 31b are disposed so as to be able to support the respective ultrasonic transducers 21 and 22 at a prescribed distance away from each other along the axial direction of the fluid pipe 10 inclined at the same angle in the opposite direction to each other.

Though the structures of the supporting units 31 a and 31b are sufficient if they can support the respective ultrasonic transducers 21 and 22, it is preferable to have a structure adjustable to an arbitrary angle of inclination. It is more preferable to have a structure such that, for instance, when the inclination angle of the first ultrasonic transducer 21 is adjusted, the second ultrasonic transducer 22 is automatically adjusted to the same angle in the opposite direction.

While the first ultrasonic transducer 21 is used for actual flow rate measurement, the second ultrasonic transducer 22 is designed to be used only to confirm whether the fixing of the first ultrasonic transducer 21 used for actual measurement is good or bad. In other words, it is used only when the first ultrasonic transducer 21 is fixed to the pipe 20 for the first time, or when confirming and adjusting the fixation state at the time of inspection after fixing. Accordingly, it is desirable that attaching and detaching to the wedge 30 is easily possible at the time of fixation work or inspection work to avoid from being used during usual flow rate measurement.

It should be noted that the wedge 30 is fixed on the outer surface of the fluid pipe 10 via highly viscous grease, a metal couplant, or the like excellent in ultrasonic transmissivity.

A method of setting the ultrasonic transmitting and receiving means 20 of the present embodiment will be explained next.

As shown in FIG. 2, when the ultrasonic transmitting and receiving means 20 is set to the fluid pipe 10, due to errors at the time of fixation, or due to aging or thermal deformation of the fluid pipe 20, for instance, an error angle $\alpha$ is developed between a wedge 30 and the outer surface of the fluid pipe 20. Conventionally, when adjustment is carried out so as not to develop such an error angle $\alpha$, since only a measuring device used for actual measurement is provided as an ultrasonic transducer, flow velocity distribution is calculated using the ultrasonic transducer, and determination is much dependent on the skill of the operator who considers the result.

However, according to the present embodiment, the error angle $\alpha$ can be absorbed without depending on the skill of an operator.

First, by the first transducer 21 and the second transducer 22, respective flow velocity distributions are measured. The inclination angles of the first transducer 21 and the second transducer 22 in the wedge 30 are set to be $\theta$. When the wedge 30 and the fluid pipe 10 are accurately positioned (in other words, when the error angle $\alpha$ is not in existence between the wedge 11 and the outer surface of the fluid pipe 20), the inclination angle $\theta$ is expected to be equal to the incident angle of the respective transducers 21 and 22 into the fluid pipe 30.

On the other hand, when the error angle $\alpha$ exists between both, since the first transducer 21 faces in the direction in which the measuring line ML1 intersects at an acute angle with respect to the direction of flow A of the fluid to be measured, the incident angle to the fluid pipe 10 in such a state is "$\theta + \alpha$". Since the second transducer 22 is inclined in the opposite direction, the incident angle to the fluid pipe 10 is "$\theta - \alpha$".

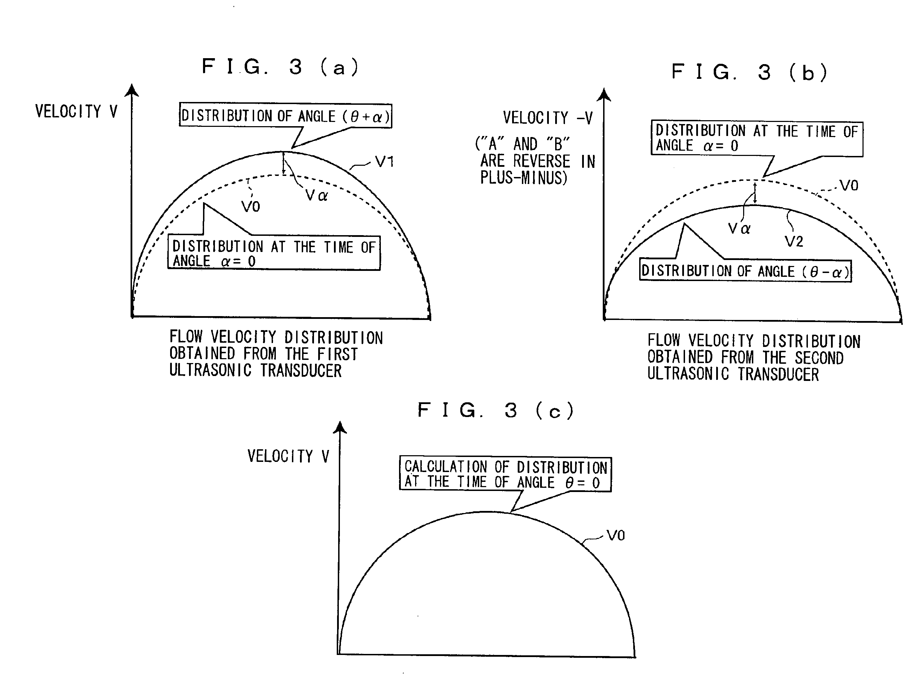

Accordingly, the flow velocity distribution V1 obtained from the output of the first transducer 21 is greater than the reference flow velocity distribution V0 by V$\alpha$ when an error angle $\alpha$ = 0 as shown in FIG. 3 (a).

The flow velocity distribution V2 obtained from by the output of the second transducer 22 is smaller than the reference flow velocity distribution V0 by V$\alpha$ when an error angle $\alpha$ = 0, as shown in FIG. 3(b).

As above, the average value of the flow velocity distribution V1 obtained from the output of the first transducer 21 and the flow velocity distribution V2 obtained from the output of the second transducer 22 is the reference flow velocity distribution V0 when an error angle $\alpha$ = 0, as shown in FIG. 3(c).

When the reference flow velocity V0 in the case of the error angle $\alpha$ = 0 is determined in this way, a fixing posture of the wedge 30 to the fluid pipe 10 is adjusted, and a flow velocity is measured again using the first transducer 21.

A spot where the flow velocity distribution V1 obtained from the first transducer 21 coincides with the reference flow velocity distribution V0 is a fixation state accurately positioned to the wedge 30 and the fluid pipe 10. In other words, the fixation state of the wedge 30 is adjusted until the flow velocity distribution V1 obtained from the first transducer 21 finally coincides with the reference flow velocity distribution V0. At each time, the ultrasonic transmitting and receiving means 20 of the present embodiment is set utilizing the output result of the second transducer 22, as necessary.

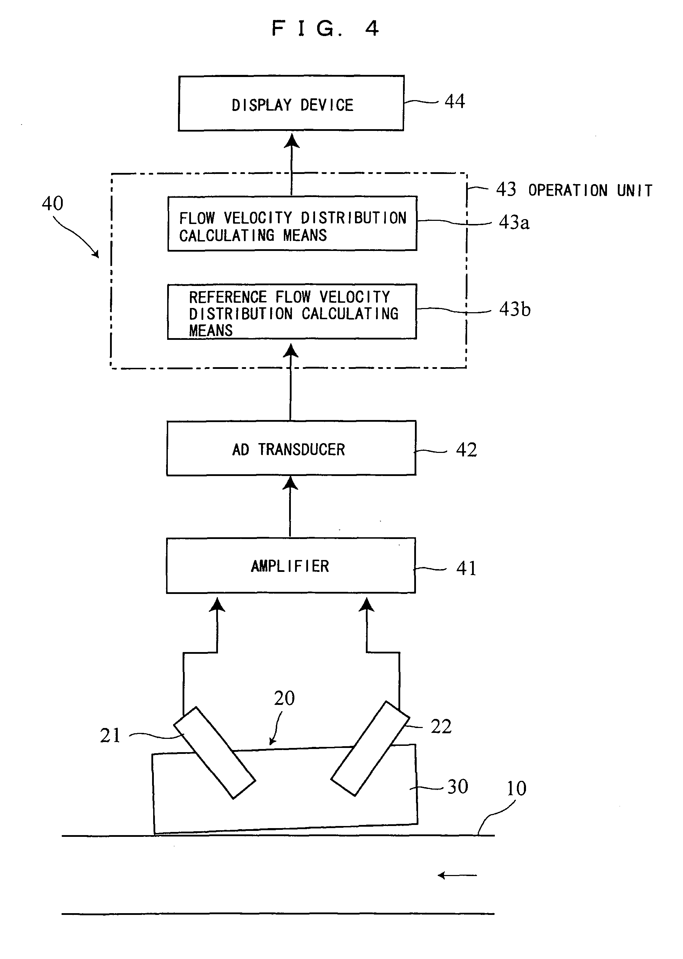

FIG. 4 is a view showing a schematic configuration of a Doppler ultrasonic flowmeter 40 which can perform the above-described method of setting. As shown in this drawing, such a Doppler ultrasonic flowmeter 40 includes an ultrasonic transmitting and receiving means 20, an amplifier 41 to amplify electric signals of ultrasonic echoes received by the first and second ultrasonic transducers 21 and 22 provided to a wedge 30, an AD transducer 42, an operating unit 43, and a display device 44.

The operating unit 43 includes a flow velocity distribution calculator 43a composed of computer program products, and a reference flow velocity distribution calculator 43b. The flow velocity distribution calculator 43a calculates respective flow velocity distributions V1 and V2 from electric signals of the ultrasonic echoes from the respective ultrasonic transducers 21 and 22, the electric signals being amplified by the amplifier and digitalized by the AD transducer 42. In the reference flow velocity distribution calculator 43b, a reference flow velocity is calculated as described above, for instance, by determining the average value of the respective flow velocity distributions V1 and V2, using the respective flow velocity distributions V1 and V2.

It should be noted that though the reference flow velocity distribution V0 is calculated as the average value of the respective flow velocity distributions V1 and V2 in the above-described explanation, it is possible to calculate the reference flow velocity distribution V0 using other expressions for calculation depending on the fixation posture of the wedge 30 to the fluid pipe 10.

According to such a Doppler ultrasonic flowmeter 40, at the time of first fixation or at the time of inspection, it is possible to easily adjust the fixation posture of the wedge 30 so as to take an adequate fixation posture. Furthermore, it is possible thereafter to measure the flow rate of a fluid to be measured by transmitting ultrasonic pulses only by the first ultrasonic transducer 21. In other words, completely similar to an ordinary Doppler ultrasonic flowmeter, it is possible to measure a flow rate of a fluid to be measured by receiving ultrasonic echoes reflected by a reflector such as bubbles or aluminum fine powder in the fluid to be measured.

In the explanation described above, the second ultrasonic transducer 22 is taken out after adjustment of the fixation posture of the wedge 30 to the fluid pipe 10, and only the first ultrasonic transducer 21 is used for actual measurement. It is not advisable to always keep two ultrasonic transducers along the pipe axis direction to one unit of the Doppler ultrasonic flowmeter in view of cost performance. Accordingly, as described above, it is recommended that the second ultrasonic transducer 22 be used only at the time of fixation or inspection.

It is preferable to always use two ultrasonic transducers 21 and 22 when consideration of cost demerit is not required. In that case, it is also possible to use them in a manner that the output results of both transducers are regularly checked to see whether or not any difference appears between both results, and when a difference appears, the fixation posture of the wedge 11 is adjusted right away. In particular, it is possible to take measures to counter aging or thermal deformation of the fluid pipe immediately.

Furthermore, it is also possible to always use the output results of two ultrasonic transducers, not to use only an output result of one of the ultrasonic transducer, and in such a case, even when aging or the like arise in the pipe, the reliability of the obtained measurement result is enhanced.

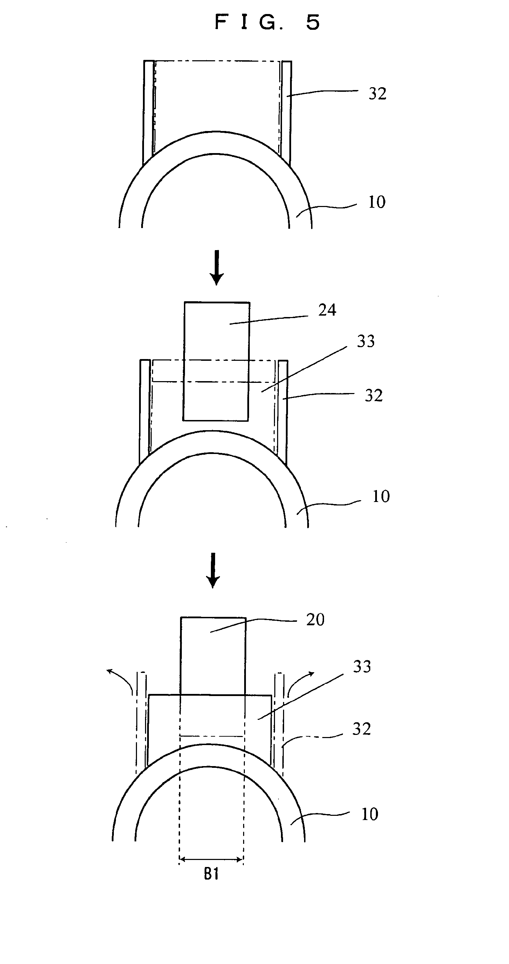

A method of preparing a wedge matched to the fluid pipe 10 will be explained next using FIG. 5.

A mold 32 of the wedge 30 is disposed on the circumference of the fluid pipe 10. Next, materials of the wedge 30 (a liquid 33 hardening over time) is poured into the mold 32. A dummy 24 which is the same in shape as the ultrasonic transducer 20 is set up before the liquid 40 is solidified.

Oil such as glycerin or the like is applied as a releasing agent on the inner circumferential surface of the mold 32 and the outer circumferential surface of the dummy 24. When the fluid 33 is solidified, the mold 32 is removed and the dummy 24 is pulled out. Then, the ultrasonic transducer 20 is set in a hole formed by inserting the dummy 24.

Between the fluid pipe 10 and the ultrasonic transducer 20, the solidified wedge 30 is provided along the outer circumferential shape of the fluid pipe 10, and ultrasonic pulses are transmitted from the ultrasonic transducer 20 via the wedge 30. That is, the area of contacting surface between the outer circumference of the fluid pipe 10 and the bottom of the wedge 30 becomes large, allowing the fixation between both in close contact. Accordingly, the transmission width of the ultrasonic pulse transmitted from the ultrasonic transducer 20 becomes wide. Through this, since transmission to the fluid to be measured in the fluid pipe 10 is carried out efficiently, the measurement accuracy is enhanced.

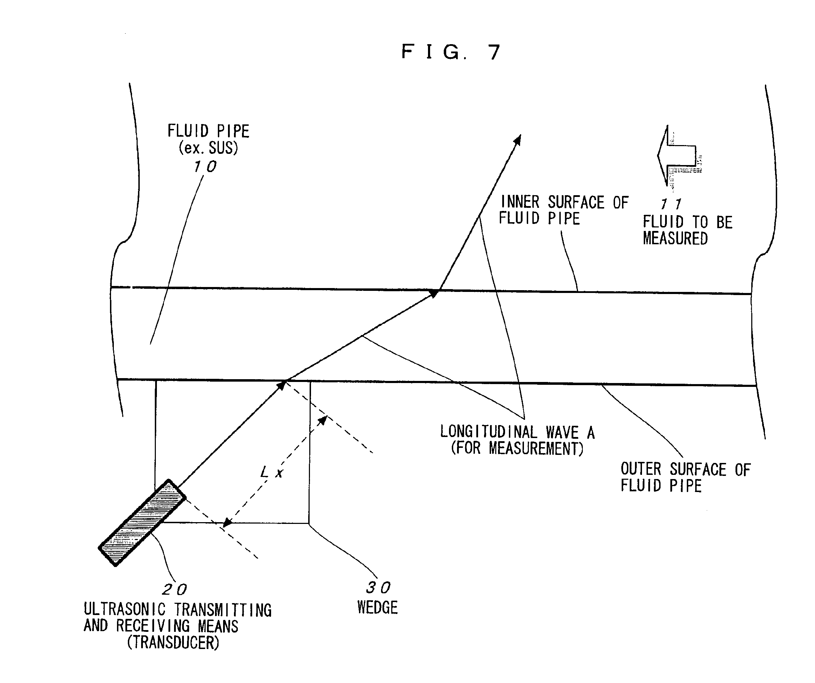

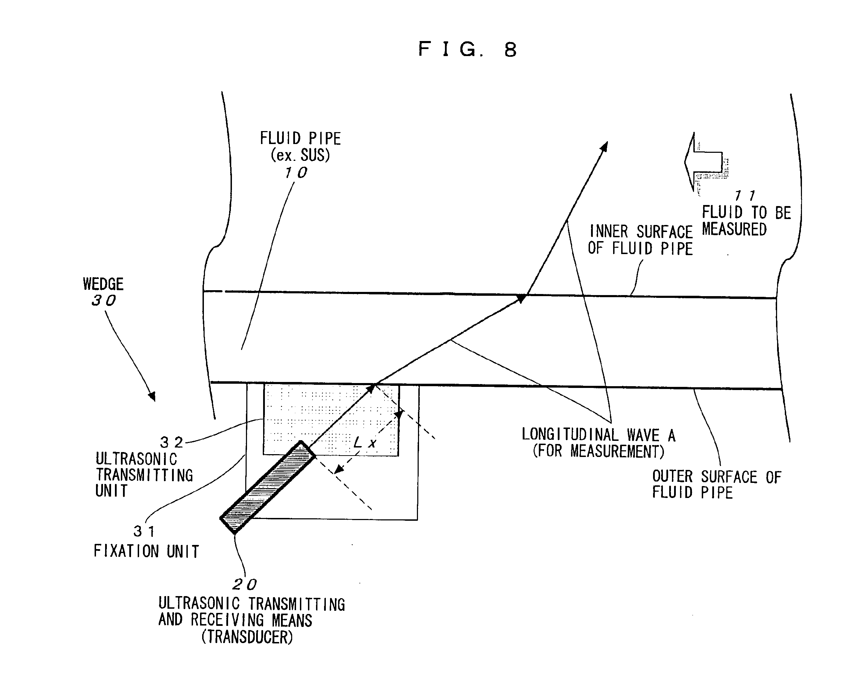

A relation between the ultrasonic transducer 20 and the wedge 30 will be explained next based on FIGs 7 and 8. When the size (any two or more among outer diameter, wall thickness, and inner diameter), materials of the fluid pipe 10, the sort of the fluid 11, and so on are known in advance, the incident angle $\alpha$ of the ultrasonic wave described previously can be identified. The fixation angle of the transducer 20 to the wedge 30 is identified based on the identified incident angle $\alpha$ of the ultrasonic wave, and the wedge 30 is formed so as to obtain the fixation angle.

The relation between the wedge 30 and the ultrasonic transmitting and receiving means 20 will be explained. If the distance from the ultrasonic transmitting and receiving means 20 to the outer surface of the fluid pipe 10 in the wedge 30 is taken as Lx, the velocity with which the ultrasonic wave penetrates through the wedge 30 is taken as Vk, and time of dead zone which an ultrasonic oscillator has is taken as Tt, the wedge 30 is processed so as to be Lx > Vk x Tt. Concretely, for instance, when the material of the wedge 30 is an acrylic resin, since Vk = 2700 m/sec, and Tt = 20 ms, it is enough to ensure 54 mm or more. Accordingly, the wedge is prepared ensuring about 70 mm.

(FIG. 8)

The embodiment shown in FIG. 8 uses different materials for respective portions based on two functions required of the wedge 30. The two functions are a function to fix the transducer 20 to the fluid pipe 10 relating to the fluid to be measured 11 and a function to make the ultrasonic transmitted from the transducer 20 arrive at the outer surface of the fluid pipe 10. The former function is achieved by the fixation unit 31, and the latter function is realized by the ultrasonic transmitting unit 32. If a material having a small Vk value can be adopted as a material for the ultrasonic transmitting unit 32, it is possible to provide a wedge 30 which is compact and can restrain generation of noise. The material of the fixation unit 31 is that of easily processable resin or the like such as epoxy resin.

It should be noted that, though not shown, if the material of the ultrasonic transmitting unit 32 is a material having equal acoustic impedance to the fluid pipe 10, generation of a transverse wave at the interface between the wedge 30 and the fluid pipe 10 can be restrained. In that case, the ultrasonic wave incident in the fluid to be measured 11 is only a longitudinal wave, and outbreak of measurement errors caused by a transverse wave can also be restrained. Processing of the fixation unit 31 so as to obtain the specific incident angle $\alpha$ of ultrasonic wave by grasping the size (any two or more among outer diameter, wall thickness and inner diameter) of the fluid pipe 10, sort of the fluid 11, and so on is easier than the case of adopting a material such as stainless steel for also the fixation unit 31.

Industrial Availability

The present invention can be adopted not limited to the Doppler ultrasonic flowmeter but also a flowmeter belonging to an ordinary ultrasonic flowmeter.
Along with a manufacturer of an ultrasonic flowmeter, it can be used to an ultrasonic flowmeter installation business, or a maintenance service business.

Brief Description of Drawings

FIG. 1 is a conceptual diagram showing a path of an ultrasonic wave;
FIG. 2 is a schematic diagram showing a state in which an ultrasonic transmitting and receiving unit relating to a second embodiment is fixed to a pipe;
FIGs. 3(a), 3(b) and 3(c) are views explaining a process to calculate a reference flow velocity distribution using an ultrasonic transmitting and receiving means;
FIG. 4 is a view showing a schematic configuration of a Doppler ultrasonic flowmeter;
FIG. 5 is a conceptual diagram showing a wedge manufacture on-the-spot of fixation;
FIG. 6 is a conceptual diagram showing a case in which contact of a curved surface of a pipe and a wedge is not sufficient;

FIG. 7 is a conceptual diagram showing a relation between an ultrasonic transducer and the length of a wedge;
FIG. 8 is another conceptual diagram showing a relation between an ultrasonic transducer and the length of a wedge; and
FIG. 9 is a view showing a disadvantage of a conventional Doppler ultrasonic flowmeter.

Explanation of Numerals and Symbols

| 10 | FLUID PIPE |
|---|---|
| 11 | FLUID TO BE MEASURED |
| 20 | ULTRASONIC TRANSMITTING AND RECEIVING MEANS (TRANSDUCER) |
| 21 | FIRST ULTRASONIC TRANSDUCER |
| 22 | SECOND ULTRASONIC TRANSDUCER |
| 24 | DUMMY |
| 30 | WEDGE |
| 31a | FIRST SUPPORTING UNIT |
| 31 b | SECOND SUPPORTING UNIT |
| 32 | MOLD |
| 33 | FLUID |
| 40 | DOPPLER ULTRASONIC FLOWMETER |
| 41 | AMPLIFIER |
| 42 | AD TRANSDUCER |
| 43 | OPERATION UNIT |
| 43a | FLOW VELOCITY DISTRIBUTION CALCULATING MEANS |
| 43b | REFERENCE FLOW VELOCITY DISTRIBUTION CALCULATING MEANS |
| 44 | DISPLAY DEVICE |

## Claims

1. An ultrasonic flowmeter for measuring a flow rate of a fluid to be measured, comprising:

an ultrasonic transmitter for launching ultrasonic pulses of a prescribed frequency into the fluid to be measured in fluid pipe from an ultrasonic transducer along a measurement line;
a flow velocity distribution measurement means for measuring flow velocity distribution of the fluid to be measured in a measurement region by receiving ultrasonic echoes reflected from the measurement region among the ultrasonic pulses incident into the fluid to be measured; and
a flow rate operation means for calculating a flow rate of the fluid to be measured in the measurement region based on the flow velocity distribution of the fluid to be measured,
wherein the ultrasonic transmitter and a receiver for receiving ultrasonic echoes are made to be an ultrasonic transducer integrating a transmitting function and a receiving function of the ultrasonic wave;
wherein a wedge for fixing said ultrasonic transmitter to the outer surface of the fluid pipe for the fluid to be measured is provided; and
wherein the distance from said ultrasonic transmitter to the outer surface of the fluid pipe and the distance from the outer surface of the fluid pipe to the inner surface of the fluid pipe through which the ultrasonic wave passes are formed to be an integral multiple of a half-wave length of ultrasonic wave incident into the fluid to be measured.

2. The ultrasonic flowmeter according to claim 1, wherein a contact surface with the fluid pipe of the wedge is made equal to the curvature of the fluid pipe.

3. The ultrasonic flowmeter according to any one of claim 1 or claim 2,
wherein a distance from the ultrasonic transmitter to the outer surface of the fluid pipe of the wedge is made longer than the distance obtained from multiplying the velocity of the ultrasonic penetrating through the wedge by the time of dead zone the ultrasonic oscillator carries.

4. The ultrasonic flowmeter according to any one of claim 1 or claim 3,
wherein the material of the wedge from the ultrasonic transmitter and receiver to the outer surface of the fluid pipe is made equal to that of the acoustic impedance of the fluid pipe.

5. A wedge used for an ultrasonic flowmeter for measuring a flow rate of a fluid to be measured, said ultrasonic flowmeter comprising:

an ultrasonic transmitter for launching ultrasonic pulses of a predetermined frequency into the fluid to be measured in fluid pipe from an ultrasonic transducer along a measurement line;

a flow velocity distribution measurement means for measuring flow velocity distribution of the fluid to be measured in a measurement region by receiving ultrasonic echoes reflected from the measurement region among the ultrasonic pulses incident into the fluid to be measured; and

a flow rate operation means for calculating a flow rate of the fluid to be measured in the measurement region based on the flow velocity distribution of the fluid to be measured,

the ultrasonic transmitter and the receiver for receiving the ultrasonic echoes being integrally formed,

wherein the ultrasonic transmitter and the receiver for receiving ultrasonic echoes are made to be an ultrasonic transducer integrating a transmitting function and a receiving function of the ultrasonic wave;

wherein said wedge comprises:

a fixation unit to fix said ultrasonic transducer to a fluid pipe relating to a fluid to be measured; and

an ultrasonic transmitting unit from the ultrasonic transmitter fixed to the fixation unit to the outer surface of the fluid pipe, and

wherein the distance passing through from the outer surface of the fluid pipe to the inner surface of the fluid pipe is an integral multiple of a half-wave length of incident ultrasonic wave, and the distance from the ultrasonic transmitter to the outer surface of the fluid pipe in the wedge is taken to be an integral multiple of a half-wave length of incident ultrasonic wave.

6. The wedge according to claim 5, wherein a contact surface with the fluid pipe of the wedge is made equal to the curvature of the fluid pipe.

7. The wedge for the ultrasonic flowmeter according to any one of claim 5 or claim 6, wherein the wedge comprises:

a fixation unit for fixing said ultrasonic transmitter to the fluid pipe relating to the fluid to be measured; and

an ultrasonic transmitting unit from the ultrasonic transmitter fixed to the fixation unit to the outer surface of the fluid pipe,

wherein the distance from the ultrasonic transmitter in the ultrasonic transmitting unit to the outer surface of the fluid pipe is made longer than the distance calculated by multiplying velocity with which ultrasonic penetrates through the wedge and the time of dead zone the oscillator of ultrasonic wave carries.

8. The wedge for the ultrasonic flowmeter according to claim 7, wherein the material of the ultrasonic transmitting unit in the wedge is made equal to that of the acoustic impedance of the fluid pipe.

# F I G. 1

FLUID PIPE
(ex. SUS)
*1 0*

LONGITUDINAL WAVE A
(FOR MEASUREMENT)

INNER SURFACE OF
FLUID PIPE

*1 1*
FLUID TO BE
MEASURED

$L x2$

$L x1$

OUTER SURFACE OF
FLUID PIPE

*2 0*
ULTRASONIC TRANSMITTING
AND RECEIVING MEANS
(TRANSDUCER)

*3 0*
WEDGE

EP 1 703 261 A1

# F I G. 2

# FIG. 3 (a)

VELOCITY V

DISTRIBUTION OF ANGLE ($\theta + \alpha$)

V1

V$\alpha$

V0

DISTRIBUTION AT THE TIME OF ANGLE $\alpha = 0$

FLOW VELOCITY DISTRIBUTION OBTAINED FROM THE FIRST ULTRASONIC TRANSDUCER

# FIG. 3 (b)

VELOCITY -V

("A" AND "B" ARE REVERSE IN PLUS-MINUS)

DISTRIBUTION AT THE TIME OF ANGLE $\alpha = 0$

V0

V$\alpha$

V2

DISTRIBUTION OF ANGLE ($\theta - \alpha$)

FLOW VELOCITY DISTRIBUTION OBTAINED FROM THE SECOND ULTRASONIC TRANSDUCER

# FIG. 3 (c)

VELOCITY V

CALCULATION OF DISTRIBUTION AT THE TIME OF ANGLE $\theta = 0$

V0

EP 1 703 261 A1

# F I G． 4

DISPLAY DEVICE — 44

40

43 OPERATION UNIT

FLOW VELOCITY DISTRIBUTION CALCULATING MEANS — 43a

REFERENCE FLOW VELOCITY DISTRIBUTION CALCULATING MEANS — 43b

AD TRANSDUCER — 42

AMPLIFIER — 41

20

21 — 22

30 10

# F I G. 5

F I G. 6

# FIG. 7

FLUID PIPE
(ex. SUS)
*10*

INNER SURFACE OF
FLUID PIPE

*11*
FLUID TO BE
MEASURED

LONGITUDINAL WAVE A
(FOR MEASUREMENT)

OUTER SURFACE OF
FLUID PIPE

$Lx$

*20*
ULTRASONIC TRANSMITTING
AND RECEIVING MEANS
(TRANSDUCER)

*30*
WEDGE

EP 1 703 261 A1

# FIG. 8

FLUID PIPE
(ex. SUS)
*10*

FLUID TO BE MEASURED
*11*

INNER SURFACE
OF FLUID PIPE

WEDGE
*30*

*32*

ULTRASONIC
TRANSMITTING
UNIT

*31*

FIXATION UNIT

*20*

ULTRASONIC TRANSMITTING
AND RECEIVING MEANS
(TRANSDUCER)

*Lx*

LONGITUDINAL WAVE A
(FOR MEASUREMENT)

OUTER SURFACE OF
FLUID PIPE

EP 1 703 261 A1

# FIG. 9

FLUID PIPE
(ex. SUS)
10

FLUID TO BE
MEASURED
11

INNER SURFACE
OF FLUID PIPE

LONGITUDINAL WAVE A
(FOR MEASUREMENT)

OUTER SURFACE
OF FLUID PIPE

30
WEDGE

20
ULTRASONIC TRANSMITTING
AND RECEIVING MEANS
(TRANSDUCER)

FLOW
VELOCITY

PIPE INNER
DIAMETER

NOISE

FLOW VELOCITY
CALCULATING MEANS

EP 1 703 261 A1

| | | |
|---|---|---|
| **INTERNATIONAL SEARCH REPORT** | International application No. | |
| | PCT/JP2004/019433 | |

**A. CLASSIFICATION OF SUBJECT MATTER**
Int.Cl$^7$  G01F1/66

According to International Patent Classification (IPC) or to both national classification and IPC

**B. FIELDS SEARCHED**

Minimum documentation searched (classification system followed by classification symbols)
Int.Cl$^7$  G01F1/00-9/02

Documentation searched other than minimum documentation to the extent that such documents are included in the fields searched

| | | | |
|---|---|---|---|
| Jitsuyo Shinan Koho | 1922-1996 | Toroku Jitsuyo Shinan Koho | 1994-2005 |
| Kokai Jitsuyo Shinan Koho | 1971-2005 | Jitsuyo Shinan Toroku Koho | 1996-2005 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2003-130699 A   (The Tokyo Electric Power Co., Inc.), 08 May, 2003 (08.05.03), Full text; all drawings (Family: none) | 1-8 |
| A | JP 3013596 B  (Fuji Electric Co., Ltd.), 28 February, 2000 (28.02.00), Full text; all drawings (Family: none) | 1-8 |
| A | JP 3039159 B  (Fuji Electric Co., Ltd.), 08 May, 2000 (08.05.00), Full text; all drawings (Family: none) | 1-8 |

☐ Further documents are listed in the continuation of Box C.　　☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 19 January, 2005 (19.01.05) | 08 February, 2005 (08.02.05) |

| Name and mailing address of the ISA/ | Authorized officer |
|---|---|
| Japanese Patent Office | |
| Facsimile No. | Telephone No. |

Form PCT/ISA/210 (second sheet) (January 2004)

**EP 1 703 261 A1**

## REFERENCES CITED IN THE DESCRIPTION

### Patent documents cited in the description

- JP 2000097742 A

- JP 2003344131 A